(19)

Europäisches
Patentamt
European
Patent Office
Office européen
des brevets

(11) **EP 3 381 986 A1**

(12) **EUROPEAN PATENT APPLICATION**

(43) Date of publication:
03.10.2018 Bulletin 2018/40

(51) Int Cl.:
**C09D 5/00** (2006.01)    **C09D 175/04** (2006.01)
**C09D 133/08** (2006.01)    **D21H 19/10** (2006.01)

(21) Application number: **18167145.4**

(22) Date of filing: **16.03.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **26.03.2015 PCT/CN2015/075145
02.07.2015 PCT/CN2015/083203**

(62) Document number(s) of the earlier application(s) in
accordance with Art. 76 EPC:
**16712764.6 / 3 274 410**

(71) Applicant: **BASF SE**
**67056 Ludwigshafen am Rhein (DE)**

(72) Inventors:
• **YAN, Patrick**
**200137 Shangai (CN)**
• **XIA, Jianfeng**
**Hong Kong (CN)**

(74) Representative: **BASF IP Association**
**BASF SE**
**G-FLP-C006**
**67056 Ludwigshafen (DE)**

Remarks:
This application was filed on 13-04-2018 as a
divisional application to the application mentioned
under INID code 62.

(54) **TRANSFER METALLISATION PRIMER**

(57)    The invention relates to a transfer metallization primer comprising 1) 60-80wt% of polyurethane dispersion based on the weight of the transfer metallization primer, and 2) 20-40wt% of self crosslinkable styrene acrylic emulsion based on the weight of the transfer metallization primer; wherein the polyurethane dispersion has Tg of -50°C to -30°C and the self crosslinkable styrene acrylic emulsion has Tg of 30°C to 70°C. In addition, the invention relates to use of the transfer metallization primers for paper packaging materials of cigarette, liquor, food, and cosmetic.

EP 3 381 986 A1

## Description

Field of the Invention

The invention relates to transfer metallization primers. In addition, the invention relates to use of transfer metallization primers for paper packaging materials of cigarette, liquor, food, cosmetic, etc.

Description of Related Arts

Transfer metallization primers are well known in the art of paper packaging for cigarette, liquor, food, and cosmetic etc. Currently, transfer metallization primers are mainly organic solvent based systems. Generally, there is much organic solvent in the organic solvent based transfer metallization primer, which causes two significant defects: 1) much solvent can evaporate during the printing process, which results in strong odor and thus has negative influence on the environment; 2) the evaporated organic solvent is highly flammable and the safety in the site is a problem, thus many safety investments are needed to ensure the safety in the site. Therefore, there is a need to develop an aqueous transfer metallization primer in order to reduce the amount of volatile organic compound.

US2011/0317269A1 disclosed a releasable metalized embossed transfer film comprising (a) a polymeric base layer, (b) an embossing material layer in direct contact with the polymeric base layer, and (c) a metal layer in direct contact with the embossing material layer opposite the polymeric base layer. Particularly, the releasable embossing metalized transfer film can be prepared by coating a polyurethane embossing material onto a polyester film, and then depositing a metal layer on the embossed surface.

CN103821032A disclosed a method for producing an aluminized paper packaging material comprising the steps of 1) coating polyester film with a peeling material, 2) applying aluminum onto the peeling material in vacuum to form a vacuum-aluminized transfer film, 3) coating an adhesive onto the transfer film and then applying paper thereon to form a composite semi-finished product, 4) peeling off the polyester film from the composite semi-finished product to obtain the final aluminized paper packaging materials.

However, there is still a need to find an aqueous transfer metallization primer which can form a releasable metalized transfer film with high shining, good heat resistance, release property, and high transparency, while has excellent environment-friendly effect.

Summary of the Invention

For the purpose of the present invention, a transfer metallization primer is provided, which comprises:

1) 60-80wt% of polyurethane dispersion (PUD) based on the weight of the transfer metallization primer; and

2) 20-40wt% of self crosslinkable styrene acrylic emulsion based on the weight of the transfer metallization primer;

wherein the polyurethane dispersion has Tg of -50°C to -30°C and the self crosslinkable styrene acrylic emulsion has Tg of 30°C to 70°C.

The present invention also provides another transfer metallization primer comprising a colloidal acrylic emulsion, wherein the colloidal acrylic emulsion has acid value of 60 to 250 mgKOH/g, weight average molecular weight (Mw) of 5,500 to 100,000 daltons, and Tg of 20 to 140°C.

In addition, the present invention relates to use of the transfer metallization primers for paper packaging materials of cigarette, liquor, food, cosmetic, etc.

Description of drawing

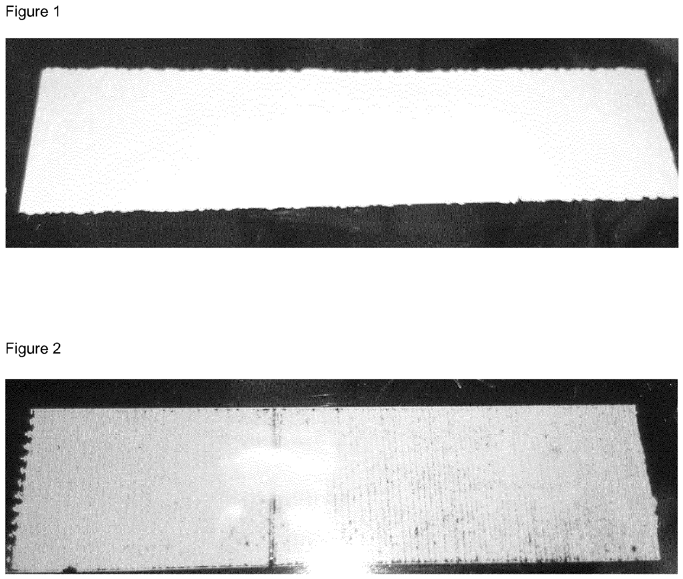

Figure 1 shows a photograph according to one embodiment of the present invention. Figure 2 shows a photograph according to one comparative embodiment.

Embodiments of the Invention

In one embodiment of the present invention, the present invention provides a transfer metallization primer comprising:

1) 60-80wt% of polyurethane dispersion based on the weight of the transfer metallization primer; and

2) 20-40wt% of self crosslinkable styrene acrylic emulsion based on the weight of the transfer metallization primer;

wherein the polyurethane dispersion has Tg of -50°C to -30°C and the self crosslinkable styrene acrylic emulsion has Tg of 30°C to 70°C.

Preferably, the transfer metallization primer comprises 65-75wt% of polyurethane dispersion and 25-35wt% of self crosslinkable styrene acrylic emulsion based on the weight of the transfer metallization primer.

In one embodiment of the present invention, the polyurethane dispersion comprises 30-50wt% of polyurethane resin and 50-70wt% of water based on the weight of the polyurethane dispersion.

In one embodiment of the present invention, the polyurethane resin is derived from 35-60wt% of polyol and 40-65wt% of isocyanate based on the weight of the polyurethane resin.

Preferably, the polyurethane resin can be prepared from the following components: 1) a polyol made of dicarboxylic acid such as adipic acid or succinic acid with a polyol monomer such as ethylene glycol, 1,4-butane diol, 1,6-hexane diol, diethylene glycol, glycerol, trimethylolpropane, or 1,2-propanediol by polycondensation reaction, wherein the total percentage of polyol is up to 35-60% in the final polyurethane resin; 2) isocyanate such as isophorone diisocyanat (IPDI), hexamethylene diisocyanate (HDI), hydrogenated diphenylmethane-4,4'-diisocyanate (H12MDI) or combination thereof, wherein the total percentage of isocyanate in the final polyurethane resin is up to 40-65%.

In the preparation of the polyurethane dispersion (PUD), component 1) polyol and component 2) isocyanate are reacted by urethanization between OH group and NCO group and the resulted polyurethane resin is then dispersed in the water to form an aqueous dispersion having 30-50% solid content.

The resulted polyurethane dispersion has particle size range from 30-90nm, preferably 40-70nm. The particle size of the polyurethane dispersion has effect on shining, smooth and transparency properties for the final metallization film. For example, when the particle size is too big, the surface shining property can drop, and the film surface after metallization may be hazy and not smooth.

The self crosslinkable styrene acrylic emulsion is made from styrene and/or 2-methyl stryrene with (meth)acrylic acid, methyl (meth)acrylate, butyl (meth)acrylate, 2-ethylhexyl (meth)acrylate, ethyl (meth)acrylate and combination thereof through emulsion polymerization. The self crosslinkable styrene acrylic emulsion has a particle size ranging from 60-100nm, preferably 60-80nm, such that the formed film can have a good transparency, shining and surface smooth properties. When particle size of the self crosslinkable styrene acrylic emulsion is too big, the film surface after metallization may be hazy and not smooth.

In one preferred embodiment of the invention, said emulsion polymerization is carried out in a manner known in the art. Preferably, anionic emulsifier used in the emulsion polymerization can be fatty acid salts such as sodium stearate, sodium oleate and sodium laurate; alkylarylsulfonic acid salts such as sodium dodecylbenzenesulfonate; alkyl sulfate ester salts such as sodium lauryl sulfate; alkyl sulfosuccinate ester salts such as sodium monoactyl sulfosuccinate, sodium dioctyl sulfosuccinate and sodium polyoxyethylenelauryl sulfosuccinate; polyoxyalkylene alkyl ether sulfate ester salts such as sodium polyoxyethylene lauryl ether sulfate; polyoxyalkylene alkylaryl ether sulfate ester salts such as sodium polyoxyalkylene nonylphenol ether sulfate; alkyl diphenyl ether disulfonates; etc. and the amount of the anionic emulsifier is about 0.1-4wt%, preferably 0.5-3wt%, more preferably 1-2wt% based on the weight of the total monomers.

By adjusting the ratio between polyurethane dispersion and self crosslinkable styrene acrylic emulsion, it is possible to obtain good transfer metallization properties. More specifically, for transfer metallization primer, the amount of the polyurethane dispersion (PUD) is generally about 60-80wt% in the primer, while the amount of the self crosslinkable styrene acrylic emulsion is about 20-40wt% in the primer. When the ratio of PUD in the primer is too high, heat resistance will drop. In contrast, when the ratio of the self crosslinkable styrene acrylic emulsion is too high, the peeling release property will drop.

In one preferred embodiment of the present invention, the self crosslinkable styrene acrylic emulsion has Tg of 40°C to 60°C.

In one preferred embodiment of the present invention, the polyurethane dispersion has Tg of -45°C to -30°C, preferably -40°C to -30°C.

Any additive usually used in the art can be contained in the transfer metallization primer. For example, the transfer metallization primer can comprise an additive selected from surfactant, coalescent agent, defoamer, wetting agent, wax, and combination thereof.

It was found that polyurethane dispersion (PUD) has strong impact on the release property and shining property of the transfer metallization primer. When glass transition temperature (Tg) of PUD is too high, it can cause the final film brittle, and thus it is difficult to release completely. When Tg of PUD is too low, film is very flexible and has strong adhesion onto the substrate. In addition, it was found that the self crosslinkable styrene acrylic emulsion has strong impact on heat resistance, shining and release properties of the transfer metallization primer. When Tg of the self crosslinkable styrene acrylic emulsion is too low, the film surface can be hazy and have poor heat resistance. When Tg of the styrene acrylic emulsion is too high, the film surface is not smooth due to poor film formation, and gloss would be low. Furthermore, the peeling property would be getting worse.

Here Tg of PUD means Tg of polyurethane in the PUD, and Tg of the self crosslinkable styrene acrylic emulsion means Tg of styrene acrylic copolymer in the self crosslinkable styrene acrylic emulsion.

When the styrene acrylic emulsion is not self crosslinkable, good heat resistance cannot be achieved, even though the styrene acrylic emulsion has the desired Tg above. It was found that self crosslinkable styrene acrylic emulsion can enhance the heat resistance dramtically relative to non-self crosslinkable styrene acrylic emulsion.

In one embodiment of the invention, the present invention provides a transfer metallization primer comprising a colloidal acrylic emulsion, wherein the colloidal acrylic emulsion has acid value of 60 to 250 mgKOH/g, weight average molecular weight of 5,500 to 100,000 daltons, and Tg of 20°C to 140°C.

In one preferred embodiment of the invention, the acid value is from 150 to 210 mgKOH/g, the weight average molecular weight is from 6,000 to 60,000 daltons, and Tg is from 60 to 130 °C.

This colloidal acrylic emulsion can be obtained by emulsion polymerization in the presence of surfactant. Particularly, water and surfactant are added into for example a four neck glass reactor and heated to 80-90°C. Then pre-emulsion of acrylate monomers emulsified with water and surfactant are added into the reactor to form a colloidal acrylic emulsion. The acrylate monomer can be alkyl/cycloaliphatic acrylate or alkyl/cycloaliphatic methacrylate, such as methyl (meth)acrylate, ethyl (meth)acrylate, propyl (meth)acrylate, isopropyl (meth)acrylate, butyl (meth)acrylate, isobutyl (meth)acrylate, isobornyl (meth)acrylate, cyclohexyl (meth)acrylate and combination thereof.

The surfactant here can be alkyl sulfate, alkyl-acryl sulfonate, alkyl ethersulfates, alkylphenol ethersulfates, sulfosuccinate, sulfossuccinamate, phosphoric acid esters, fatty alcohol ethoxylate, modified fatty alcohol ethoxylate, alkylphenol ethoxylate, alkyl polyglycolether, alkyl polyglycosides, EO/PO block copolymers etc. The surfactant can be used singly or in a combination of two or more surfactants. Typical surfactant can be but not limited to Disponil FES27, Disponil FES 77, Disponil SUS 875 Special, Disponil AES 60, Disponil AES 25, Disponil FEP 6300, Disponil SDS30, Disponil SLS 103, Disponil LDBS, Disponil AFEX 3070, Disponil TA 400, Lutensol AT 11 to AT 25, Lutensol TO8 to TO 15, Emulan TO 2080 to TO 4070 etc. available from BASF. In one embodiment of the present invention, single surfactant or surfactant package can be used.

Generally, Mw of polymers in the emulsion polymerization can be controlled by the amount of chain transfer agent. The higher the amount of the chain transfer agent is, the lower Mw of the resulted polymer will be. General speaking, it is preferred to have a high Mw in order to get good release property. It is preferred to use chain transfer agent of less than 7%, more preferably less than 3%, in particular less than 1.5%, most preferably less than 0.5% based on the total weight of the monomers in order to achieve good release property. Typical chain transfer agent can be: 1) thiols, such as: dodecyl mercaptane, t-dodecyl mercaptane, 3-mercaptopropionic acid, 2-ethylhexyl thioglycolate, terpinnolene, butyl 3-mercaptopropanoate and similar chemical homologues; 2) halocarbons, such as: carbon tetrachloride and similar chemical homologues; and 3) alcohols, such as iso-propanol, iso-butanol and similar chemical homologues.

The present invention relates to use of the transfer metallization primer for paper packaging materials of cigarette, liquor, food, cosmetic, etc.

According to the present invention, the transfer metallization process comprises the following steps of:

1) applying the transfer metallization primer onto the surface of PET film;

2) metalizing Al on top of the transfer metallization primer;

3) applying water-based adhesive on top of metalized Al layer;

4) laminating adhesive with a paper substrate; and

5) peeling off PET film from another side on the press.

The final product of transfer metallization paper is a surface metalized paper with shining and mirror aspect, and this transfer metallization paper can be further used to package cigarette, alcohol, food, cosmetic, etc.

For peeling release property, the less the residual area of PET film is, the better the result is. In the context of the invention, it is considered being good when less than 5% of PET film resides.

Heat resistance is an important property of transfer metallization primer as there is a heat sealing process at a temperature of about 120°C for about 6-8 seconds in the following packaging process. Heat resistance is measured by putting two pieces of coated film together by face to face, then using heater to press the films at a temperature of about 120°C.

- Glass transition temperature (Tg) is calculated according to Fox

$$\text{Equation:} \quad 1/Tg\ (Polymer) = Wt\%\ _1/Tg1 + Wt\%\ _2/Tg2 + \cdots\cdots + Wt\%\ _n/Tgn$$

(Remark: Wt% n is the weight content of each monomer based on total monomer, Tgn is the Tg of homopolymer of corresponding monomer, all temperatures used in the Fox Equation are expressed in degree K.

The glass transition temperature of homopolymers may be found, for example, in "Polymer Handbook", edited by J. Brandrup and E. H. Immergut, Interscience Publishers.)

The particle size is measured by dynamic light scattering (DLS) particle size analyser like Malvern Nano ZS90.

The molecular weight (Mw) is measured by Gel Permeation Chromatography (GPC) with poly(acrylic acid)-Na salt as standards.

All percentages are mentioned by weight unless otherwise indicated.

Examples

The present invention is now further illustrated by reference to the following examples, however, the examples are used for the purpose of explanation and not intended to limit the scopes of the invention.

Example 1

60g of Astacin Top LL was added into a beaker with stirring at 200rpm by IKA automatic agitator, and then 40g of Joncryl 7302 was added drop wise with stirring followed by adding 20g of water and 6g of 2-isopropanol and stirring at 500rpm for 10 minutes to get homogeneous dispersion.

The resulted aqueous dispersion was coated onto PET film, and then dried at room temperature for 5 minutes. Finally, the coated film was put into vacuum metallization chamber and metalized by using Al.

Comparative example 1

Comparative example 1 repeats the procedure of example 1, except that Joncryl 7302 is replaced by a non self-crosslinkable Acrylic emulsion-1 (Joncryl 90).

Comparative example 2

Comparative example 2 repeats the procedure of comparative example 1, except that the amounts of Astacin TOP LL and Joncryl 90 exchange.

Example 2

Example 2 repeats the procedure of example 1, except that the amounts of Astacin Top LL and Joncryl 7302 change.

Comparative example 3

Comparative example 3 repeats the procedure of comparative example 1, except that Astacin TOP LL is replaced by Astacin TOP PT.

Comparative example 4

Comparative example 4 repeats the procedure of comparative example 3, except that Joncryl 90 is replaced by a self crosslinkable Joncryl 7302.

The composition of the primer and the results are listed in table 1 below.

Table 1

| | Particle size (nm) | Tg (°C) | Comp. Ex. 1 (wt%) | Comp. Ex. 2 (wt%) | Ex. 1 (wt%) | Ex. 2 (wt%) | Comp. Ex. 3 (wt%) | Comp. Ex.4 (wt%) |
|---|---|---|---|---|---|---|---|---|
| **PUD-1 (Astacin Top LL)** | 60 | -40 | 60 | 40 | 60 | 80 | | |
| **PUD-2 (Astacin TOP PT)** | 200 | -48 | | | | | 60 | 60 |
| **Acrylic emulsion-1 (non self crosslinkable, Joncryl 90)** | 75 | 105 | 40 | 60 | | | 40 | |
| **Acrylic emulsion-2 (self crosslinkable, Joncryl 7302)** | 80 | 50 | | | 40 | 20 | | 40 |
| **Shining property** | | | ●●●●● | ●●●●● | ●●●●● | ●●●●● | ●● | ●● |
| **Release property** | | | ●●●● | ● | ●●●● | ●●●● | ●● | ●● |
| **Heat resistance** | | | ● | ● | ●●●● | ●●●● | ● | ●●●● |
| Remarks: Acrylic emulsion-1 is a non-self crosslinkable styrene-acrylic emulsion; Acrylic emulsion-2 is self crosslinkable acrylic emulsion; Astacin Top LL, Astacin TOP PT, Joncryl 90 and Joncryl 7302 are available from BASF. Note: ● represents properties of the primer, wherein ●●●●● represents best properties and ● represents worst properties. ●●●● or above indicates acceptable performance; ●●● or below indicates unacceptable performance. | | | | | | | | |

In the comparative example 1, the used styrene acrylic emulsion is non self crosslinkable styrene acrylic emulsion Joncryl 90, and poor heat resistance is achieved. In contrast, Joncryl 7302 is used as a self crosslinkable styrene acrylic emulsion in the example 1, and much better heat resistance is achieved relative to the comparative example 1, even though the non-self crosslinkable styrene acrylic emulsion Joncryl 90 has higher Tg.

It is obvious according to comparative example 1 and comparative example 2 that the amount of PUD dispersion has a significant effect on release property. When the amount of PUD is reduced to 40wt%, the release property would be dramatically reduced because there is not enough

flexibility in the film, and it is easy to get break.

It was found that the amount of Astacin TOP LL and Joncryl 7302 can be in the range of 60:40 to 80:20 in order to give good combination of release property and heat resistance balance. If ratio of Astacin TOP LL is more than 80wt%, then the release property and heat resistance will become worse because Astacin TOP LL is a soft polymer. If the ratio of Astacin TOP LL is less than 60wt%, then release property will become worse because the flexibility and elasticity are not high enough to maintain a good peeling property from the PET substrate.

It was found according to comparative example 1 and comparative example 3, when the particle size of PUD becomes too big in the comparative example 3, the shining and release properties become worse relative to comparative example 1. This is because the bigger the particle size is, the worse the achieved film is. Consequently, the shinning surface aspect and release property drop.

It is obvious according to comparative example 3 and comparative example 4, when the styrene acrylic emulsion is not self crosslinkable Joncryl 90, the heat resistance is poor. In contrast, when the self crosslinkable styrene acrylic emulsion Joncryl 7302 is used, the heat resistance is dramatically enhanced relative to non-self crosslinkable styrene acrylic emulsion in the comparative example 3, even though the non-self crosslinkable styrene acrylic emulsion has higher Tg. However, since the particle size of Astacin TOP PT is too big, the film still has deteriorated shining properties.

In addition, it is obvious according to example 1 and comparative example 4, when the particle size of PUD is too big, the shining aspect is becoming poor.

It is found that the release property is excellent in example 1, as shown in figure 1, while the release property is poor in comparative example 2, as shown in figure 2. Furthermore, the transparency of the film in example 1 is good, as shown in figure 1.

It is clear that when PUD (Astacin Top LL) and self crosslinkable styrene acrylic emulsion (Joncryl 7302) are used in the range of 60:40 to 80:20, the desired results are obtained, while when PUD (Astacin Top PT) and none self crosslinkable styrene acrylic emulsion (Joncryl 90) are used, the poorest results are obtained.

Example 3

Preperation of Colliodal acrylic emulsion: In a 1000ml four bottle-neck glass reactor with reflux, thermal couple and agitator equipped, 300g of water was charged with 0.25g of Disponil FES 77 and 0.25g of Disponil FES 27 from BASF, then stirred till homogenous and heated to 80-85°C.

Meanwhile, 100g of water was charged into an open glass vessel with stirring followed by adding 1.75g disponil FES 77 and 1.75g disponil FES 27 and stirring till homogenous. Then 113g of methyl methacrylate, 97g of methyacrylic acid, 60g of ethyl acrylate, 6g of t-dodecyl mercaptane and 30g of 2-ethylhexyl acrylate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into the reactor to neutralize the emulsion at 70°C for 2 hours till homogeneous.

Example 4

Preperation of Colliodal acrylic emulsion: In a 1000ml four bottle-neck glass reactor with reflux, thermal couple and agitator equipped, 300g of water was charged with 0.25g of Disponil DB-45 and 0.25g of Disponil FES 27 from BASF, then stirred till homogenous and heated to 80-85°C.

Meanwhile, 100g of water was charged into an open glass vessel with agitator followed by adding 1.75g disponil DB-45 and 1.75g disponil FES 27 and stirring till homogenous. Then 127g of methyl methacrylate, 96g of methyacrylic acid, 51g of ethyl acrylate, 4g of 2-ethyl hexyl thioglycoate and 26g of butyl acrylate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into
the reactor to neutralize the emulsion at 70°C for 2 hours till homogeneous.

Example 5

Preperation of Colliodal acrylic emulsion: In a 1000ml four bottle-neck glass reactor with reflux, thermal couple and agitator equipped, 300g of water was charged with 0.25g of Disponil LDBS-23 and 0.25g of Lutensol TO 4070 from BASF, then stirred till homogenous and heated to 80-85°C.

Meanwhile, 100g of water was charged into an open glass vessel with agitator followed by adding 1.75g disponil LDBS 23 and 1.75g Lutensol TO 4070 and stirring till homogenous. Then
204g of methyl methacrylate, 96g of methyacrylic acid and 5g of methoxy butyl 3-mercaptopropionate were charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 95g of 20% ammonia solution was added into
the reactor to neutralize the emulsion at 70°C for 2 hours till homogeneous.

Example 6

In a 1000ml four bottle-neck glass reactor with reflux, thermal couple and agitator equipped, 300g of water was charged with 0.25g of Disponil FES 77 and 0.25g of Disponil SDS 30 from BASF, then stirred till homogenous and heated to 80-85°C.

Meanwhile, 100g of water was charged into an open glass vessel with agitator followed by adding 1.75g Disponil FES 77 and 1.75g Disponil SDS 30 and stirring till homogenous. Then 137g of methyl methacrylate, 69g of methyacrylic acid, 60g of 2-ethylhexyl acrylate and 34g of isobornyl methacrylate were mixed with 5g of butyl 3-mercaptopropionate and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 120 minutes. Then 68.2g of 20% ammonia solution was added

into the reactor to neutralize the emulsion at 70°C for 2 hours till homogeneous.

Comparative example 5

In a 1000ml four bottle-neck glass reactor with reflux, thermal couple and agitator equipped, 300g of water was charged with 0.25g of Disponil SLS 103 and 0.25g of Lutensol AT-18 from BASF, then stirred till homogenous and heated to 80-85°C.

Meanwhile, 100g of water was charged into an open glass vessel with agitator followed by adding 1.75g disponil SLS 103 and 1.75g Lutensol AT-18 and stirring till homogenous. Then 120g of methyl methacrylate, 83g of methyacrylic acid, 67g of ethyl acrylate and 30g of isobornyl methacrylate

were mixed with 12g of isopropanol and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 120 minutes. Then 82g of 20% ammonia solution was added into the reactor to neutralize the emulsion at 70°C for 2 hours till homogeneous.

Comparative example 6

In a 1000ml four bottle-neck glass reactor with reflux, thermal couple and agitator equipped, 300g of water was charged with 0.25g of Disponil FES 77 and 0.25g of Disponil FES 27 from BASF, then stirred till homogenous and heated to 80-85°C.

Meanwhile, 100g of water was charged into an open glass vessel with agitator followed by adding 1.75g disponil FES 77 and 1.75g disponil FES 27 and stirring till homogenous. Then 137g of methyl methacrylate, 69g of methyacrylic acid, 60g of 2-ethylhexyl acrylate and 34g of isobornyl methacrylate were mixed with 24g of 3-mercaptopropionic acid and charged into the open glass vessel gradually with stirring at 200rpm and continuously stirring at 600rpm for another 30 minutes to form the pre-emulsion.

When the temperature of the four bottle-neck glass reactor reached 80°C, 15g of 20% ammonium persulfate solution was added into the reactor by one shot. Then the pre-emulsion above was continuously added into the reactor during a period of 240 minutes, while temperature was controlled at 80-90°C. After the pre-emulsion feed was added completely, the reaction was maintained at 80-90°C for another 100 minutes. Then 68.2g of 20% ammonia solution was added into the reactor to neutralize the emulsion at 70°C for 2 hours till homogeneous.

The primer based on the colloidal emulsion can be prepared at room temperature according to the following procedure: 70g of the resulted colloidal emulsion was put in a beaker, 20g of water was then charged together with 10g of 2-isopropanol under agitation for 5 minutes till get homogeneous. Surprisingly, all of these colloidal emulsions show very good surface shining property. Furthermore, a primer was obtained with good peeling property, heat resistance, printability, levelling and surface shining aspect after metallization.

All the colloidal acrylic emulsion samples: example 3, example 4, example 5, comparative example 5, example 6 and comparative example 6 were formulated with isopropanol and water mixture, the weight ratio of isopropanol and water is isopropanol/water=1:2. The solid content of the final formulation based on each colloidal acrylic emulsion was adjusted to 20% by above isopropanol

and water mixture, which is ready to print for the following evaluation according to the process.

The measured results are listed in table 2.

Table 2

| | Mw | Calculated Tg | Acid value | Release proper- | Heat resistance | Shining proper- |
|---|---|---|---|---|---|---|
| Comp. Ex.5 | 5000 | 82.5 | 180 | ●●● | ●●●●● | ●●●●● |
| Ex.3 | 11000 | 65 | 210 | ●●●●● | ●●●● | ●●●●● |
| Comp. Ex.6 | 1500 | 65 | 150 | ● | ●●● | ●●●●● |
| Ex.4 | 18000 | 75 | 210 | ●●●●● | ●●●●● | ●●●●● |
| Ex.5 | 11000 | 127 | 210 | ●●●●● | ●●●●● | ●●●●● |
| Ex.6 | 10000 | 65 | 150 | ●●●● | ●●●● | ●●●●● |

Remarks: ●●●● or above indicates the results acceptable in the industry, while ●●● or below indicates the results non acceptable in the industry

It is found that the release property is becoming poor when Mw of the colloidal emulsion is too low.

It is found that the release property is excellent in example 3.

It is also found the heat resistance is excellent for example 4, and example 5 and comparative example 5, heat resistance is dependent on Tg of the polymer, the higher Tg of the polymer, the better the heat resistance can be achieved. Example 4 and example 5 have both excellent heat resistance and release property due to high molecular weight and high Tg of the polymer.

It will be apparent to those skilled in the art that various modifications and variations can be made in the present invention without departing from the scope or spirit of the invention.

Thus, it is intended that the present invention cover such modifications and variations as come within the scope of the appended claims and their equivalents.

**Claims**

1. A transfer metallization primer comprising:

    1) 60-80wt% of polyurethane dispersion based on the weight of the transfer metallization primer; and
    2) 20-40wt% of self crosslinkable styrene acrylic emulsion based on the weight of the transfer metallization primer;

    wherein the polyurethane dispersion has Tg of -50°C to -30°C and the self crosslinkable styrene acrylic emulsion has Tg of 30°C to 70°C.

2. The transfer metallization primer according to claim 1, wherein the transfer metallization primer comprises 65-75wt% of polyurethane dispersion and 25-35wt% of self crosslinkable styrene acrylic emulsion based on the weight of the transfer metallization primer.

3. The transfer metallization primer according to claim 1, wherein the polyurethane dispersion comprises 30-50wt% of polyurethane resin and 50-70wt% of water based on the weight of the polyurethane dispersion.

4. The transfer metallization primer according to claim 3, wherein the polyurethane resin is derived from 35-60wt% of polyol and 40-65wt% of isocyanate based on the weight of the polyurethane resin.

5. The transfer metallization primer according to claim 1, wherein the self crosslinkable styrene acrylic emulsion comprises a polymer derived from monomer selected from the group consisting of styrene and 2-methyl styrene and monomer selected from the group consisting of (meth)acrylic acid, methyl (meth)acrylate, butyl (meth)acrylate, 2-ethylhexyl (meth)acrylate and ethyl (meth)acrylate.

6. The transfer metallization primer according to any one of claims 1 to 5, wherein the polyurethane dispersion has a particle size of 30-90nm, preferably 40-70nm.

7. The transfer metallization primer according to any one of claims 1 to 6, wherein the self crosslinkable styrene acrylic emulsion has particle size of 60-100nm, preferably 60-80nm.

8. The transfer metallization primer according to any one of claims 1 to 7, wherein the self crosslinkable styrene acrylic emulsion has Tg of 40 to 60°C.

9. The transfer metallization primer according to any one of claims 1 to 8, wherein the polyurethane dispersion has Tg of -45 to -30°C, preferably -40 to -30°C.

10. The transfer metallization primer according to any one of claims 1 to 9, wherein the transfer metallization primer can further comprise an additive selected from surfactant, coalescent agent, defoamer, wetting agent, wax, and combination thereof.

11. Use of the transfer metallization primers according to any one of claims 1 to 10 for paper packaging materials of cigarette, liquor, food, and cosmetic.

Figure 1

Figure 2

Europäisches
Patentamt

European
Patent Office

Office européen
des brevets

# EUROPEAN SEARCH REPORT

Application Number

EP 18 16 7145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 204403 A (DAINIPPON INK & CHEMICALS) 4 August 1998 (1998-08-04) * paragraph [0011] - paragraph [0012] * ----- | 1,8 | INV. C09D5/00 C09D175/04 C09D133/08 D21H19/10 |
| X | WO 2012/170623 A2 (VALSPAR SOURCING INC [US]; HAVEN MICHAEL [US]; GUSTAFSON MICHAEL [US]) 13 December 2012 (2012-12-13) * claims 1,4-6,9-11,13-14 * ----- | 1,8,10 | |

TECHNICAL FIELDS
SEARCHED (IPC)

C09D
C08L
D21H

The present search report has been drawn up for all claims

| Place of search | Date of completion of the search | Examiner |
|---|---|---|
| Munich | 24 July 2018 | Miao, Kathryn |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                           

& : member of the same patent family, corresponding
document

EPO FORM 1503 03.82 (P04C01)

EP 3 381 986 A1

## ANNEX TO THE EUROPEAN SEARCH REPORT
## ON EUROPEAN PATENT APPLICATION NO.

EP 18 16 7145

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2018

| Patent document cited in search report | | Publication date | Patent family member(s) | | Publication date |
|---|---|---|---|---|---|
| JP H10204403 | A | 04-08-1998 | NONE | | |
| WO 2012170623 | A2 | 13-12-2012 | CA | 2844586 A1 | 13-12-2012 |
| | | | CN | 103748184 A | 23-04-2014 |
| | | | EP | 2726565 A2 | 07-05-2014 |
| | | | US | 2014154938 A1 | 05-06-2014 |
| | | | US | 2017298573 A1 | 19-10-2017 |
| | | | WO | 2012170623 A2 | 13-12-2012 |

EPO FORM P0459

For more details about this annex : see Official Journal of the European Patent Office, No. 12/82

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110317269 A1

- CN 103821032 A

**Non-patent literature cited in the description**

- Polymer Handbook. Interscience Publishers